# EUROPÄISCHE PATENTSCHRIFT

(11) **EP 3 663 719 B1**
(45) Veröffentlichungstag und Bekanntmachung des Hinweises auf die Patenterteilung: **25.09.2024**
(21) Anmeldenummer: 19207417.7
(22) Anmeldetag: 06.11.2019
(51) Int. Cl.: G01C 21/00, G01C 21/32, G08G 1/16, G08G 1/13, G08G 1/01, G01C 21/36

(54) **VERFAHREN ZUM BEREITSTELLEN VON KARTENDATEN IN EINEM KRAFTFAHRZEUG, KRAFTFAHRZEUG UND ZENTRALE DATENVERARBEITUNGSEINRICHTUNG**
METHOD FOR PROVIDING MAP DATA IN A MOTOR VEHICLE, MOTOR VEHICLE AND CENTRAL DATA PROCESSING DEVICE
PROCÉDÉ DE FOURNITURE DE DONNÉES DE CARTE DANS UN VÉHICULE AUTOMOBILE, VÉHICULE AUTOMOBILE ET DISPOSITIF CENTRAL DE TRAITEMENT DES DONNÉES

(30) Priorität: 05.12.2018 DE 102018221054
(43) Veröffentlichungstag der Anmeldung: 10.06.2020
(73) Patentinhaber: Volkswagen AG, 38440 Wolfsburg (DE)
(72) Erfinder: Eigel, Thomas, 13585 Berlin (DE); Busch, Sebastian, 38114 Braunschweig (DE)

(56) Entgegenhaltungen:
- JP-A- 2009 083 815
- US-A1- 2017 124 476

## Beschreibung

Die Erfindung betrifft ein Verfahren zum Bereitstellen von Kartendaten in einem Kraftfahrzeug. Zur Erfindung gehören auch ein Kraftfahrzeug sowie eine zentrale Datenverarbeitungseinrichtung.

Aus dem Stand der Technik bekannte digitale Karten umfassen typischerweise bauliche Verkehrswege, wie zum Beispiel Straßen oder Radwege. Gerade im Zuge der zunehmenden Automatisierung von Kraftfahrzeugen gewinnt auch die Genauigkeit und Verlässlichkeit solcher Kartendaten immer mehr an Bedeutung. Nichtsdestoweniger sind zuverlässige und genaue Kartendaten auch für Fahrer nicht autonom fahrender Kraftfahrzeuge relevant. Wünschenswert wäre es daher also, möglichst zuverlässige und genaue Kartendaten in einem Kraftfahrzeug bereitstellen zu können.

Die US 2017/0124476 A1 beschäftigt sich mit der Erkennung und Klassifikation umgebender Objekte, insbesondere anderer Verkehrsteilnehmer wie zum Beispiel Fußgänger. Weiterhin kann anhand der Verknüpfung von Sensordaten, zum Beispiel der Fußgängererkennung, mit Umgebungsinformationen, wie zum Beispiel einer naheliegenden Konzerthalle, auf eine zukünftige Bewegung solcher Fußgänger geschlossen werden. Dann kann eine optimale Eigentrajektorie des Kraftfahrzeugs bestimmt werden. Zwar ist die Kenntnis über die wahrscheinliche Bewegung von Fußgängern bezüglich Verkehrssicherheit ebenfalls von Vorteil, eine zuverlässigere oder genauere Bereitstellung von Kartendaten in Kraftfahrzeugen kann dadurch jedoch nicht bewerkstelligt werden.

Die JP 2009083815 A beschäftigt sich mit einer genaue Erfassung von Positionen von Fußgängern und anderen Fahrzeugen in einer Umgebung vor und nach einem Verkehrsunfall, der durch ein eigenes Fahrzeug verursacht wurde. Hierfür wird auf ein Fahrtenschreibergerät zurückgegriffen.

Aufgabe der vorliegenden Erfindung ist es, ein Verfahren zum Bereitstellen von Kartendaten in einem Kraftfahrzeug, ein Kraftfahrzeug und eine zentrale Datenverarbeitungseinrichtung bereitzustellen, mittels welchen die Sicherheit im Straßenverkehr erhöht werden kann.

Diese Aufgabe wird gelöst durch ein Verfahren, ein Kraftfahrzeug und eine zentrale Datenverarbeitungseinrichtung mit den Merkmalen gemäß den jeweiligen unabhängigen Patentansprüchen. Vorteilhafte Ausgestaltungen der Erfindung sind Gegenstand der abhängigen Patentansprüche, der Beschreibung und der Figuren.

Bei einem erfindungsgemäßen Verfahren zum Bereitstellen von Kartendaten in einem ersten Kraftfahrzeug werden durch mehrere zweite Kraftfahrzeuge erfasste Positionsdaten betreffend in einer Umgebung der jeweiligen zweiten Kraftfahrzeuge durch die zweiten Kraftfahrzeuge erfasste Personen an eine zentrale Datenverarbeitungseinrichtung übermittelt. Mittels der zentralen Datenverarbeitungseinrichtung wird in Abhängigkeit von den aggregierten Positionsdaten mindestens ein Weg bestimmt, der von zumindest manchen der Personen zumindest zum Teil benutzt wurde und Wegdaten des bestimmten mindestens einen Wegs als Teil von den Kartendaten in dem ersten Kraftfahrzeug bereitgestellt.

Die Erfindung beruht auf der Erkenntnis, dass gerade die Kenntnis über Wege, die typischerweise von Personen, wie zum Beispiel Fußgänger, benutzt werden, besonders sicherheitsrelevant ist. Gerade jedoch im Zusammenhang mit solchen Fußgängerwegen oder auch Fahrradwegen kommt es oft vor, dass solche von Personen typischerweise benutzten Wege von den tatsächlich baulich vorgesehenen und in Karten verzeichneten Wegen, wie zum Beispiel ausgewiesenen Fußgängerwegen, stark abweichen. Gerade jedoch gesammelte Schwarmdaten, die Informationen über tatsächliche Positionen solcher Personen beinhalten, eignen sich besonders gut, um auf genaue und zuverlässige Weise die tatsächlich von Personen genutzten Wege zu ermitteln. Diese können dann vorteilhafterweise als Teil von Kartendaten in einem Kraftfahrzeug, vorliegend dem ersten Kraftfahrzeug, bereitgestellt werden. Im Allgemeinen kann dabei das erste Kraftfahrzeug auch eines der zweiten Kraftfahrzeuge darstellen oder kann von den zweiten Kraftfahrzeugen verschieden sein.

Unter Schwarmdaten sind dabei Daten zu verstehen, die von einem Fahrzeugschwarm, das heißt vielzähligen verschiedenen Fahrzeugen, die vorliegend als zweite Kraftfahrzeuge bezeichnet werden, bereitgestellt werden. Solche Schwarmdaten umfassen die erfassten Positionsdaten der jeweiligen Personen, die sich in der Umgebung der betreffenden zweiten Kraftfahrzeuge befinden. Mit anderen Worten kann ein solches zweites Kraftfahrzeug wiederholt überwachen, ob sich in seiner Umgebung eine Person befindet beziehungsweise detektieren lässt. Falls dem so ist, kann eine diese Person betreffende Positionsinformation bestimmt und an die zentrale Datenverarbeitungseinrichtung übermittelt werden. Diese zentrale Datenverarbeitungseinrichtung sammelt die von den jeweiligen zweiten Kraftfahrzeugen übermittelten Positionsinformationen von verschiedensten Orten und von verschiedensten Personen. Durch Aggregation dieser gesammelten Positionsdaten lässt sich somit bestimmen, insbesondere durch statistische Auswertung dieser Daten, welche Wege typischerweise von den Personen benutzt werden und wo diese Wege typischerweise verlaufen. Da diese Informationen auf Basis tatsächlicher Positionen tatsächlich erfasster Personen gewonnen wurden, stimmen die so ermittelten Wege auch mit tatsächlich von Personen benutzten Wegen überein. Mit anderen Worten lassen sich so auf besonders genaue und zuverlässige Weise reale Wege, also zum Beispiel Fußgänger und/oder Radwege, bestimmen.

Erfindungsgemäß wird in Abhängigkeit von den aggregierten Positionsdaten überprüft, ob sich zumindest ein Haltepunkt auf dem bestimmten Weg befindet, und falls dem so ist, wird eine Position des Haltepunkts als Teil der Wegdaten dem ersten Kraftfahrzeug bereitgestellt. Gerade Haltepunkte von Fußgängern und/oder Radfahrern sind besonders relevant, da sie typischerweise solche Bereiche darstellen, an welchen die Wege der Personen andere Verkehrswege wie zum Beispiel Straßen kreuzen. Zum Beispiel befinden sich solche Haltepunkte typischerweise am Anfang eines Zebrastreifens oder an einer Fußgängerampel zu Beginn eines über die Straße führenden Fußgängerüberwegs oder am Ende eines durch eine Querstraße unterbrochenen Fußgängerwegs, usw. An solchen Haltepunkten sammeln sich also typischerweise viele Personen, insbesondere Fußgänger und/oder Radfahrer, sodass von solchen Haltepunkten ein besonders hohes Sicherheitsrisiko ausgeht und in solchen Bereichen entsprechend viel Vorsicht geboten ist. Die Kenntnis über solche Haltepunkte ist daher besonders vorteilhaft, da sie durch diverse Fahrerassistenzsysteme des Kraftfahrzeugs beziehungsweise vom Fahrer selbst berücksichtigt werden können, wodurch sich wiederum die Sicherheit erhöhen lässt. Dabei ist es weiterhin vorteilhaft, wenn in Abhängigkeit von den erfassten Positionsdaten Bewegungsdaten der Personen ermittelt werden und der zumindest eine Haltepunkt in Abhängigkeit von den Bewegungsdaten bestimmt wird. Da solche Haltepunkte typischerweise Punkte, Bereiche oder Linien darstellen, an welchen Personen wie Fußgänger und/oder Radfahrer anhalten, lassen sich solche Haltepunkte auf Basis der Schwarmdaten dadurch auf einfache Weise identifizieren, indem nach Bereichen gesucht wird, in welchen die Geschwindigkeit der erfassten Personen typischerweise 0 ist oder zumindest sehr gering, zum Beispiel unter einem vorbestimmten Schwellwert. Dies lässt sich nun vorteilhafterweise auf Basis der bereitgestellten Bewegungsdaten ermitteln, die, wie zuvor beschrieben, auf einfache Weise bereitgestellt werden können.

Wie bereits erwähnt ist es bevorzugt, dass die Personen Fußgänger und/oder Radfahrer darstellen. Sowohl Fußgänger als auch Radfahrer benutzen häufig Wege, die nicht explizit als Fußgängerwege ausgewiesen sind beziehungsweise als offizielle Radfahrwege gelten, zum Beispiel um bestimmte Abkürzungen zu nehmen, oder ähnliches. Vorteilhafterweise lassen sich durch die Erfindung und ihre Ausgestaltungen nun solche tatsächlichen Fußgänger- und Radfahrerwege unabhängig davon, ob diese auch offizielle Verkehrswege darstellen, bestimmen und in einem Kraftfahrzeug als Kartendaten bereitstellen. Durch die so gewonnene Kenntnis über reale von Fußgängern und/oder Fahrradfahrern genutzte Verkehrswege in einem Kraftfahrzeug lässt sich somit die Sicherheit im Straßenverkehr deutlich erhöhen.

Im Allgemeinen soll unter den detektierten Personen jegliche Art von Verkehrsteilnehmern verstanden werden, welche kein Kraftfahrzeug benutzen. Dabei sollen als Radfahrer auch Benutzer von Fahrrädern mit Hilfsantrieb, insbesondere E-Bikes, verstanden werden. Weitere Beispiele für solche Personen wären auch Tretrollerfahrer, Skateboard-Fahrer, Inlineskater, oder ähnliches.

Bei einer weiteren vorteilhaften Ausgestaltung der Erfindung erfassen die zweiten Kraftfahrzeuge die Personen in der jeweiligen Umgebung mittels zumindest eines Umfeldsensors. Durch die zunehmende Automatisierung bestimmter Fahrfunktionen und Fahrzeugen im allgemeinen weisen bereits heutige Kraftfahrzeuge vielzählige Umfeldsensoren auf, wie zum Beispiel Umfeldkameras, Ultraschallsensoren, Radarsensoren und/oder Laserscanner. Diese lassen sich nun vorteilhafterweise ebenfalls zur Detektion von Personen in der Umgebung der betreffenden Kraftfahrzeuge nutzen. Durch die hohe Verfügbarkeit von einer solchen fahrzeugeigenen Sensorik in Verbindung mit einer Onlineanbindung, die üblicherweise ebenfalls in Kraftfahrzeugen vorhanden ist, können somit auf besonders einfache Weise die Positionsdaten der Personen an die zentrale Datenverarbeitungseinrichtung übermittelt werden und so die erfassten Umfelddaten, insbesondere mit Hinblick auf die erfassten Personen, zu einer besonders genauen Umfeldkarte aggregiert werden. Aus der Aggregation ergeben sich dann vorteilhafterweise die oben beschriebenen typischen Fußgänger- und Radwege. Die Kommunikationsverbindung zwischen den jeweiligen zweiten Kraftfahrzeugen, sowie dem ersten Kraftfahrzeug und der zentralen Datenverarbeitungseinrichtung kann im Allgemeinen auf jedem beliebigen geeigneten Kommunikationsstandard, bevorzugt Funkstandard, beruhen.

Dabei ist es weiterhin vorteilhaft, wenn die zweiten Kraftfahrzeuge die Positionsdaten der Personen wiederholt so lange erfassen, wie sich die jeweiligen Personen in einem bestimmten Erfassungsbereich der jeweiligen zweiten Kraftfahrzeuge, insbesondere deren zugeordneter Umfeldsensoren, befinden. Ändert sich also im Verlauf der Zeit beispielsweise die Position einer bestimmten Person, so lässt sich dies vorteilhafterweise ebenfalls erfassen. So lassen sich vorteilhafterweise nicht nur die momentanen Positionen von Personen erfassen und nutzen, sondern beispielsweise auch Positionsverlaufsdaten beziehungsweise Bewegungsdaten der betreffenden Personen. Dies ist beispielsweise besonders vorteilhaft, um zum Beispiel sogenannte Haltepunkte auf den Wegen ermitteln zu können, wie dies später näher erläutert wird.

Zum Erfassen zumindest einer der Personen durch zumindest eines der zweiten Kraftfahrzeuge wird vorzugsweise zunächst ein Objekt in der Umgebung des zweiten Kraftfahrzeugs durch das zweite Kraftfahrzeug erfasst und das erfasste Objekt durch das zweite Kraftfahrzeug als Person oder zumindest mit einer Person im Zusammenhang stehend klassifiziert, wie zum Beispiel ein Fahrradfahrer. Um Objekte in einer Umgebung eines Kraftfahrzeugs zu klassifizieren, insbesondere hinsichtlich ihrer Art, sind vielzählige Verfahren aus dem Stand der Technik bekannt, sodass hierauf nicht näher eingegangen wird. Vorzugsweise werden also die Positionsdaten dieser Objekte nur dann an die zentrale Datenverarbeitungseinrichtung übermittelt, wenn die detektierten Objekte auch tatsächlich als mit einer Person im Zusammenhang stehend, beispielsweise als Fußgänger und/oder Fahrradfahrer, klassifiziert wurden. Dies hat den Hintergrund, dass andere motorisierte Verkehrsteilnehmer typischerweise nicht von den baulich vorgegebenen Verkehrswegen abweichen. Dies ist jedoch, wie oben beschrieben, gerade im Zusammenhang mit Fußgängern und/oder Fahrradfahrern anders, sodass gerade hier eine Ermittlung der tatsächlichen Verkehrswege von Interesse ist, während sie mit Bezug auf andere motorisierte Verkehrsteilnehmer unnötig wäre, da die so ermittelten tatsächlichen Verkehrswege üblicherweise dann mit den baulich vorgegebenen Verkehrswegen übereinstimmen würden.

Weiterhin ist es gemäß einer weiteren vorteilhaften Ausgestaltung der Erfindung vorgesehen, dass zur Bereitstellung der Positionsdaten betreffend zumindest eine der erfassten Personen durch zumindest eines der zweiten Kraftfahrzeuge eine erste Position der erfassten Person relativ zum zweiten Kraftfahrzeug bestimmt wird und eine zweite Position des zweiten Kraftfahrzeugs bestimmt wird und die Positionsdaten in Abhängigkeit von der ersten Position und der zweiten Position ermittelt werden. Mit anderen Worten kann zunächst durch das Kraftfahrzeug die Relativposition der erfassten Person zum Kraftfahrzeug ermittelt werden, zum Beispiel bezüglich eines kraftfahrzeugfesten Koordinatensystems. Darüber hinaus kann das Kraftfahrzeug auch seine eigene Position, zum Beispiel mittels eines GPS-Empfängers oder einer anderen Positionsbestimmungseinrichtung des Kraftfahrzeugs, ermitteln, insbesondere als globale Position, zum Beispiel als Geokoordinaten oder GPS-Koordinaten. Durch Kenntnis dieser beiden Positionen, nämlich der Relativposition der Person zum Kraftfahrzeug sowie auch der absoluten beziehungsweise globalen Position des Kraftfahrzeugs, lässt sich somit vorteilhafterweise auch die Position der Person als globale Position ermitteln. Diese globale Position kann dann zum Beispiel ebenfalls in Form von GPS-Koordinaten angegeben werden und der zentralen Datenverarbeitungseinrichtung übermittelt werden. Es können aber auch die erfasste Relativposition der Person sowie die Eigenposition des zweiten Kraftfahrzeugs, das heißt also sowohl die erste als auch die zweite Position, an die zentrale Datenverarbeitungseinrichtung übermittelt werden, welche daraus wiederum die globale Position der Person ermittelt und zusammen mit den anderen Positionsdaten, die von den anderen zweiten Kraftfahrzeugen bereitgestellt werden, sammelt. Dabei lassen sich also die Positionsdaten betreffend die Personen auf besonders einfache Weise ermitteln.

Bei einer weiteren vorteilhaften Ausgestaltung der Erfindung wird mindestens eine Fahrerassistenzfunktion des ersten Kraftfahrzeugs in Abhängigkeit von den bereitgestellten Wegdaten ausgeführt. Bei dem Fahrerassistenzsystem des Kraftfahrzeugs, welches die Fahrerassistenzfunktion ausführt, kann es sich dabei im Allgemeinen einerseits um ein Fahrerassistenzsystem handeln, welches den Fahrer lediglich beim Führen des Kraftfahrzeugs unterstützt oder andererseits auch um ein Fahrerassistenzsystem, welches dazu ausgelegt ist, das erste Kraftfahrzeug autonom zu fahren. In beiden Fällen ist es besonders vorteilhaft, wenn eine solche Fahrerassistenzfunktion in Abhängigkeit von den bereitgestellten Wegdaten ausgeführt wird. Die Kenntnis über reale Wege, die von Personen wie Fußgängern und/oder Radfahrern benutzt werden, ist, gerade wenn sie von den baulich vorgegebenen Verkehrswegen abweichen, besonders relevant, sowohl für Fahrer, die ihr Kraftfahrzeug manuell führen, als auch für autonom fahrende Fahrzeuge. Beispielsweise kann ein Fahrer rechtzeitig auf solche ermittelten tatsächlichen Verkehrswege hingewiesen werden, vor entsprechenden Haltepunkten gewarnt werden und auch Notbremssysteme können zum Beispiel die bereitgestellten Kartendaten nutzen, um Fehleingriffe zu vermeiden beziehungsweise Eingriffe zu plausibilisieren. Auch wenn das Kraftfahrzeug autonom von einem Fahrerassistenzsystem gesteuert wird, kann dieses zum Beispiel langsamer fahren im Bereich von erfassten Haltepunkten oder typischen Kreuzungspunkten zwischen den tatsächlichen Personenwegen und dem aktuell eigenen geplanten Fahrweg des ersten Kraftfahrzeugs. Damit stehen vielzählige vorteilhafte Möglichkeiten bereit, die Sicherheit im Straßenverkehr auf Basis der bereitgestellten Wegdaten zu erhöhen.

Des Weiteren betrifft die Erfindung auch ein Kraftfahrzeug, das dazu ausgelegt ist, Personen in der Umgebung des Kraftfahrzeugs zu erfassen und Positionsdaten der Personen zu bestimmen. Weiterhin ist das Kraftfahrzeug dazu ausgelegt, die bestimmten Positionsdaten an eine zentrale Datenverarbeitungseinrichtung zu übermitteln und von der zentralen Datenverarbeitungseinrichtung Wegdaten eines auf Basis aggregierter Positionsdaten des Kraftfahrzeugs und/oder von zweiten Kraftfahrzeugen bestimmten mindestens einen Wegs, der von Personen zumindest zum Teil benutzt wurde, als Teil von Kartendaten zu empfangen, und zum Beispiel eine Assistenzfunktion in Abhängigkeit von den empfangenen Wegdaten auszuführen. Als Teil der Wegdaten ist eine Position eines Haltepunkts dem Kraftfahrzeug bereitgestellt.

Darüber hinaus betrifft die Erfindung auch eine zentrale Datenverarbeitungseinrichtung zum Bereitstellen von Kartendaten in einem ersten Kraftfahrzeug. Dabei kann die zentrale Datenverarbeitungseinrichtung zum Beispiel als Backend-Server oder Cloud-Server ausgebildet sein. Weiterhin ist die zentrale Datenverarbeitungseinrichtung dazu ausgelegt, durch mehrere zweite Kraftfahrzeuge erfasste Positionsdaten betreffend in einer Umgebung der jeweiligen zweiten Kraftfahrzeuge durch die zweiten Kraftfahrzeuge erfasste Personen zu empfangen, die empfangenen Positionsdaten zu aggregieren und in Abhängigkeit von den aggregierten Positionsdaten mindestens einen Weg zu bestimmen, der von zumindest manchen der Personen zumindest zum Teil benutzt wurde. Weiterhin ist die zentrale Datenverarbeitungseinrichtung dazu ausgelegt, Wegdaten des bestimmten mindestens einen Wegs als Teil von den Kartendaten in dem ersten Kraftfahrzeug bereitzustellen, zum Beispiel an dieses erste Kraftfahrzeug zu übermitteln. Die zentrale Datenverarbeitungseinrichtung ist dazu ausgelegt, in Abhängigkeit von den aggregierten Positionsdaten zu überprüfen, ob sich zumindest ein Haltepunkt auf dem bestimmten Weg befindet, und falls dem so ist, eine Position des Haltepunkt als Teil der Wegdaten dem ersten Kraftfahrzeug bereitzustellen, wobei die zentrale Datenverarbeitungseinrichtung dazu ausgelegt ist, in Abhängigkeit von den erfassten Positionsdaten Bewegungsdaten der Personen zu ermitteln und den zumindest einen Haltepunkt in Abhängigkeit von den Bewegungsdaten zu bestimmen

Die für das erfindungsgemäße Verfahren und seine Ausführungsformen genannten Vorteile gelten in gleicher Weise für das erfindungsgemäße Kraftfahrzeug und die erfindungsgemäße zentrale Datenverarbeitungseinrichtung. Darüber hinaus ermöglichen die im Zusammenhang mit dem erfindungsgemäßen Verfahren und seinen Ausführungsformen beschriebenen Verfahrensschritte die Weiterbildung des erfindungsgemäßen Kraftfahrzeugs und der erfindungsgemäßen zentralen Datenverarbeitungseinrichtung durch weitere korrespondierende gegenständliche Merkmale.

Ein System mit einer zentralen Datenverarbeitungseinrichtung und mindestens einem Kraftfahrzeug, wobei das System zur Ausführung eines erfindungsgemäßen Verfahrens oder eines seiner Ausführungsformen ausgebildet ist, soll ebenfalls als zur Erfindung gehörend angesehen werden.

Die Erfindung umfasst auch die Kombinationen der Merkmale der beschriebenen Ausführungsformen.

Im Folgenden ist ein Ausführungsbeispiel der Erfindung beschrieben. Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

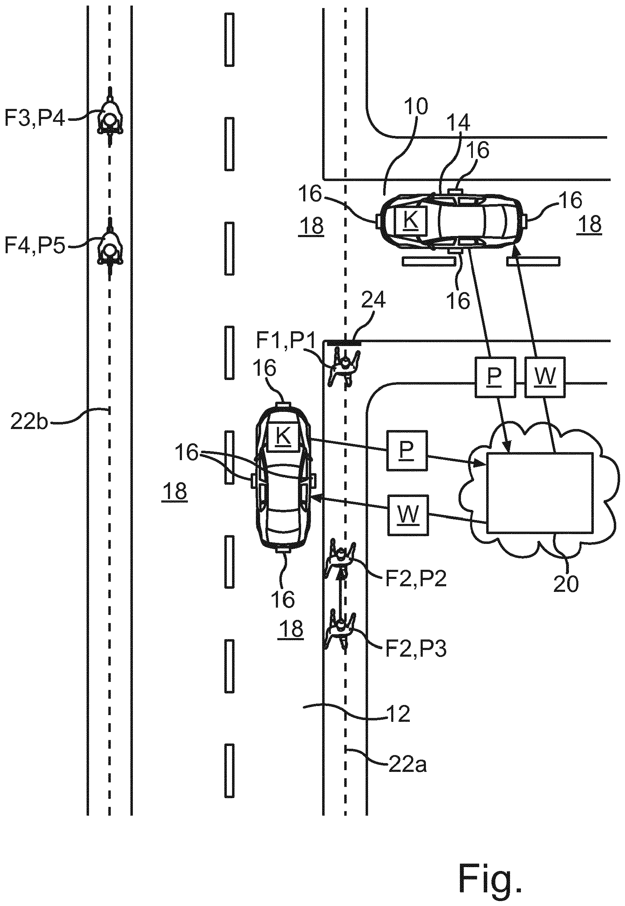

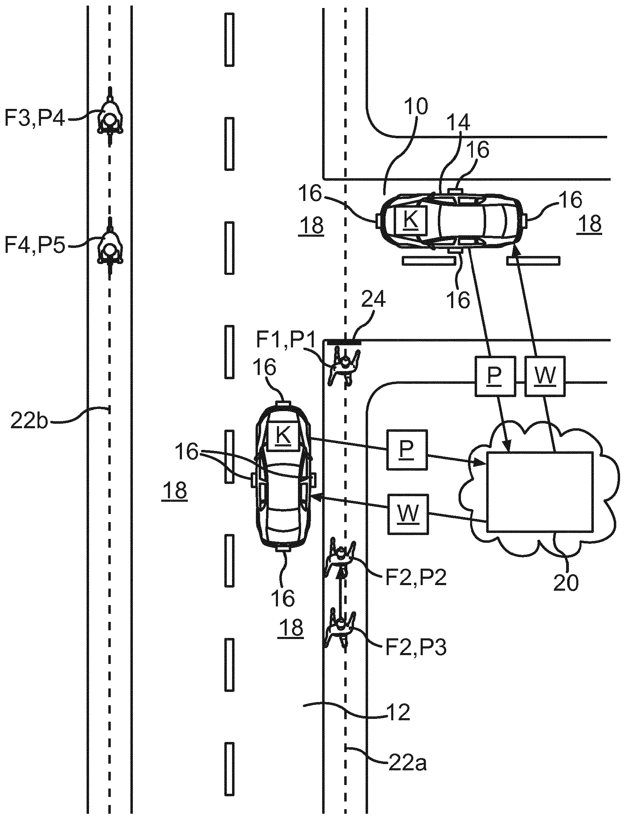

Hierzu zeigt die einzige Figur eine schematische Darstellung einer Verkehrssituation an einer einmündenden Straße 10, die zum Beispiel auf eine Hauptstraße 12 mündet, um ein Verfahren zum Bereitstellen von Kartendaten in einem Kraftfahrzeug gemäß einem Ausführungsbeispiel der Erfindung zu veranschaulichen. Exemplarisch sind hierbei zwei Kraftfahrzeuge 14 dargestellt, die jeweils auch Umfeldsensoren 16 umfassen, um ein Umfeld beziehungsweise die Umgebung 18 der jeweiligen Kraftfahrzeuge 14 zu erfassen. Diese Umfeldsensorik 16 kann nun vorteilhafterweise auch dazu genutzt werden, um in der Umgebung 18 der Kraftfahrzeuge 14 befindliche Personen zu erfassen sowie deren Positionen. Solche Personen können zum Beispiel Fußgängern und/oder Radfahrer oder andere nicht motorisierte Verkehrsteilnehmer darstellen.

Exemplarisch sind hier ein erster Fußgänger F1 an einer ersten Position P1 dargestellt, ein zweiter Fußgänger F2 an einer aktuellen zweiten Position P2 sowie dieser zweite Fußgänger F2 an einer zeitlich vorhergehenden dritten Position P3, ein Fahrradfahrer F3 an einer zugeordneten vierten Position P4 sowie ein weiterer Fahrradfahrer F4 an einer zugeordneten fünften Position P5. Wie anhand des zweiten Fußgängers F2 veranschaulicht werden soll, kann nicht nur die aktuelle Position der Personen F1 bis F4 erfasst werden, insbesondere einmalig, sondern diese Personen F1 bis F4 können so lange wiederholt erfasst werden einschließlich ihrer jeweiligen Positionen P1 bis P5 zu zugeordneten Zeitpunkten, solange sich diese Personen F1 bis F4 in Erfassungsbereichen der zugeordneten Umfeldsensorik 16 der jeweiligen Kraftfahrzeuge 14 befinden. Es können also beispielsweise zu den jeweiligen Personen F1 bis F4 auch jeweilige Positionsverlaufsdaten bereitgestellt werden. Diese von den jeweiligen Kraftfahrzeugen 14 erfassten Positionsdaten P der jeweiligen erfassten Personen F1 bis F4 werden anschließend an eine zentrale Datenverarbeitungseinrichtung 20, wie beispielsweise einen Cloud-Server, übermittelt. Diese zentrale Datenverarbeitungseinrichtung 20 aggregiert diese Positionsdaten P und wertet diese statistisch aus. Auf Basis der statistischen Auswertung dieser aggregierten Positionsdaten P können somit Wege 22a, 22b ermittelt werden, die von den erfassten Personen F1 bis F4 zumindest zum Teil benutzt wurden. Werden dabei die von vielzähligen Kraftfahrzeugen 14 bereitgestellten Positionsdaten P über längere Zeiträume gesammelt und aggregiert, lassen sich so besonders genau und zuverlässig die tatsächlichen von Fußgängern und/oder Personen genutzten Verkehrswege bestimmen. Diese können unter Umständen auch von den baulich vorgegebenen Verkehrswegen abweichen.

Die Wegdaten W betreffend die so ermittelten Wege 22a, 22b können dann vorteilhafterweise wiederum den Kraftfahrzeugen 14, insbesondere auch anderen weiteren Kraftfahrzeugen, in Form eines Teils von Kartendaten K bereitgestellt werden. Zusätzlich zu den in den Karten K verzeichneten Verkehrswegen, insbesondere auch solchen, die durch bauliche Vorgaben definiert sind, lassen sich dann zusätzlich auch die realen Fußgänger- und Radfahrwege in einer solchen Karte K berücksichtigen. Auch lassen sich, wie beschrieben, auf Basis der Positionsdaten P Bewegungsdaten der jeweiligen Personen F1 bis F4 bereitstellen. Dies ermöglicht es darüber hinaus, neben den von den Personen F1 bis F4 benutzten Wegen 22a, 22b auch Haltepunkte 24 auf diesen jeweiligen Wegen 22a, 22b, falls vorhanden, zu ermitteln, an welchen von den Personen F1 bis F4 oft oder üblicherweise angehalten beziehungsweise gestoppt wird. Solche Haltepunkte 24 befinden sich typischerweise zu Beginn einer Kreuzung des betreffenden Wegs 22a, 22b, der von den Personen F1 bis F4 benutzt wird, und anderen Verkehrswegen. In diesem Beispiel befindet sich der Haltepunkt 24 zu Beginn der Kreuzung des Fußgängerwegs 22a und der einmündenden Straße 10. Gerade an solchen Haltepunkten 24 ist also besondere Vorsicht geboten. Auch diese Haltepunkte 24 können als Teil der Wegdaten W den betreffenden Kraftfahrzeugen 14 als Teil der Kartendaten K bereitgestellt werden, und diese können dann vorteilhafterweise ebenso von den jeweiligen Kraftfahrzeugen 14 beziehungsweise von entsprechenden Fahrerassistenzsystemen genutzt werden.

Insgesamt zeigt das Beispiel, wie durch die Erfindung eine Karte für Fußgänger und Radwege inklusive typischer Haltepunkte durch Aggregation von Schwarmdaten generiert werden kann, die zudem die realen tatsächlichen Verkehrswege von Personen beinhaltet, die gegebenenfalls von baulichen Verkehrswegen abweichend genutzt werden. Mit anderen Worten können also die gemessenen Wege von den aus den baulichen Rahmenbedingungen abgeleiteten Kartendaten abweichen. Dies und die darüber hinaus ermittelten typischen Haltepunkte können dann zum Beispiel von einem Notbremssystem verwendet werden, um Fehleingriffe zu vermeiden beziehungsweise Eingriffe zu plausibilisieren. Auch können dadurch vorteilhafterweise Verkehrswege auch bei geringer Nutzungsdichte, das heißt bei momentan wenigen sichtbaren Fußgängern oder Radfahrern, verfügbar gemacht werden. Hierdurch kann die Verkehrssicherheit deutlich gesteigert werden.

### Bezugszeichenliste

- 10: Straße
- 12: Hauptstraße
- 14: Kraftfahrzeug
- 16: Umfeldsensoren
- 18: Umgebung
- 20: zentrale Datenverarbeitungseinrichtung
- 22a: Weg
- 24: Haltepunkt
- F1, F2: Fußgänger
- F3, F4: Fahrradfahrer
- K: Kartendaten
- P: Positionsdaten
- P1 - P5: Position
- W: Wegdaten

## Patentansprüche

1. Verfahren zum Bereitstellen von Kartendaten (K) in einem ersten Kraftfahrzeug (14), umfassend die Schritte:
- Übermitteln von durch mehrere zweite Kraftfahrzeuge (14) erfassten Positionsdaten (P) betreffend in einer Umgebung (18) der jeweiligen zweiten Kraftfahrzeuge (14) durch die zweiten Kraftfahrzeuge (14) erfasste Personen (F1, F2, F3, F4) an eine zentrale Datenverarbeitungseinrichtung (20);
- In Abhängigkeit von den aggregierten Positionsdaten (P) Bestimmen mindestens eines Wegs (22a, 22b), der von zumindest manchen der Personen (F1, F2, F3, F4) zumindest zum Teil benutzt wurde, mittels der zentralen Datenverarbeitungseinrichtung (20); und
- Bereitstellen von Wegdaten (W) des bestimmten mindestens einen Wegs (22a, 22b) als Teil von den Kartendaten (K) in dem ersten Kraftfahrzeug (14);
**gekennzeichnet dadurch, dass**
in Abhängigkeit von den aggregierten Positionsdaten (P) überprüft wird, ob sich zumindest ein Haltepunkt (24) auf dem bestimmten Weg (22a, 22b) befindet, und falls dem so ist, eine Position des Haltepunkts (24) als Teil der Wegdaten (W) dem ersten Kraftfahrzeug (14) bereitgestellt wird, wobei in Abhängigkeit von den erfassten Positionsdaten (P) Bewegungsdaten der Personen (F1, F2, F3, F4) ermittelt werden und der zumindest eine Haltepunkt (24) in Abhängigkeit von den Bewegungsdaten bestimmt wird.

2. Verfahren nach Anspruch 1,
**dadurch gekennzeichnet, dass**
die Personen (F1, F2, F3, F4) Fußgänger (F1, F2) und/oder Radfahrer (F3, F4) darstellen.

3. Verfahren nach einem der vorhergehenden Ansprüche,
**dadurch gekennzeichnet, dass**
die zweiten Kraftfahrzeuge (14) die Personen (F1, F2, F3, F4) in der jeweiligen Umgebung (18) mittels jeweils zumindest eines Umfeldsensors (16) erfassen.

4. Verfahren nach einem der vorhergehenden Ansprüche,
**dadurch gekennzeichnet, dass**
die zweiten Kraftfahrzeuge (14) die Positionsdaten (P) der Personen (F1, F2, F3, F4) wiederholt solange erfassen, wie sich die jeweiligen Personen (F1, F2, F3, F4) in einem bestimmten Erfassungsbereich der jeweiligen zweiten Kraftfahrzeuge (14) befinden.

5. Verfahren nach einem der vorhergehenden Ansprüche,
**dadurch gekennzeichnet, dass**
zum Erfassen zumindest einer der Personen (F1, F2, F3, F4) durch zumindest eines der zweiten Kraftfahrzeuge (14) ein Objekt in der Umgebung (18) des zweiten Kraftfahrzeugs (14) erfasst wird und das erfasste Objekt als Person (F1, F2, F3, F4) oder zumindest mit einer Person (F1, F2, F3, F4) in Zusammenhang stehend klassifiziert wird.

6. Verfahren nach einem der vorhergehenden Ansprüche,
**dadurch gekennzeichnet, dass**
zur Bereitstellung der Positionsdaten (P) betreffend zumindest eine der erfassten Personen (F1, F2, F3, F4) durch zumindest eines der zweiten Kraftfahrzeuge (14) eine erste Position (P1, P2, P3, P4, P5) der erfassten Person (F1, F2, F3, F4) relativ zum zweiten Kraftfahrzeug (14) bestimmt wird und eine zweite Position des zweiten Kraftfahrzeugs (14) bestimmt wird und die Positionsdaten (P) in Abhängigkeit von der ersten Position (P1, P2, P3, P4, P5) und der zweiten Position ermittelt werden.

7. Verfahren nach einem der vorhergehenden Ansprüche,
**dadurch gekennzeichnet, dass**
mindestens eine Fahrerassistenzfunktion des ersten Kraftfahrzeugs (14) in Abhängigkeit von den bereitgestellten Wegdaten (W) ausgeführt wird.

8. Kraftfahrzeug (14), das dazu ausgelegt ist, Personen (F1, F2, F3, F4) in der Umgebung (18) des Kraftfahrzeugs (14) zu erfassen und Positionsdaten (P) der Personen (F1, F2, F3, F4) zu bestimmen, wobei das Kraftfahrzeug (14) dazu ausgelegt ist, die bestimmten Positionsdaten (P) an eine zentrale Datenverarbeitungseinrichtung (20) zu übermitteln und von der zentralen Datenverarbeitungseinrichtung (20) Wegdaten (W) eines auf Basis aggregierter Positionsdaten (P) des Kraftfahrzeugs (14) und/oder von zweiten Kraftfahrzeugen (14) bestimmten mindestens einen Wegs (22a, 22b), der von Personen (F1, F2, F3, F4) zumindest zum Teil benutzt wurde, als Teil von Kartendaten (K) zu empfangen,
**gekennzeichnet dadurch, dass**
in Abhängigkeit von den aggregierten Positionsdaten (P) überprüft ist, ob sich zumindest ein Haltepunkt (24) auf dem bestimmten Weg (22a, 22b) befindet, und falls dem so ist, eine Position des Haltepunkts (24) als Teil der Wegdaten (W) dem Kraftfahrzeug (14) bereitgestellt ist, wobei in Abhängigkeit von den erfassten Positionsdaten (P) Bewegungsdaten der Personen (F1, F2, F3, F4) ermittelt sind und der zumindest eine Haltepunkt (24) in Abhängigkeit von den Bewegungsdaten bestimmt ist.

9. Zentrale Datenverarbeitungseinrichtung (20) zum Bereitstellen von Kartendaten (K) in einem ersten Kraftfahrzeug (14), wobei die zentrale Datenverarbeitungseinrichtung (20) dazu ausgelegt ist,
- Durch mehrere zweite Kraftfahrzeuge (14) erfasste Positionsdaten (P) betreffend in einer Umgebung (18) der jeweiligen zweiten Kraftfahrzeuge (14) durch die zweiten Kraftfahrzeuge (14) erfasste Personen (F1, F2, F3, F4) zu empfangen;
- die empfangenen Positionsdaten (P) zu aggregieren und in Abhängigkeit von den aggregierten Positionsdaten (P) mindestens einen Weg (22a, 22b) zu bestimmen, der von zumindest manchen der Personen (F1, F2, F3, F4) zumindest zum Teil benutzt wurde; und
- Wegdaten (W) des bestimmten mindestens einen Wegs (22a, 22b) als Teil von den Kartendaten (K) in dem ersten Kraftfahrzeug (14) bereitzustellen;
**dadurch gekennzeichnet, dass**
die zentrale Datenverarbeitungseinrichtung (20) dazu ausgelegt ist, in Abhängigkeit von den aggregierten Positionsdaten (P) zu überprüfen, ob sich zumindest ein Haltepunkt (24) auf dem bestimmten Weg (22a, 22b) befindet, und falls dem so ist, eine Position des Haltepunkts (24) als Teil der Wegdaten (W) dem ersten Kraftfahrzeug (14) bereitzustellen, wobei die zentrale Datenverarbeitungseinrichtung (20) dazu ausgelegt ist, in Abhängigkeit von den erfassten Positionsdaten (P) Bewegungsdaten der Personen (F1, F2, F3, F4) zu ermitteln und den zumindest einen Haltepunkt (24) in Abhängigkeit von den Bewegungsdaten zu bestimmen.

## Claims

1. Method for providing map data (K) in a first motor vehicle (14), comprising the steps of:
- transmitting position data (P) detected by a plurality of second motor vehicles (14) concerning people (F1, F2, F3, F4) detected by the second motor vehicles (14) in a surrounding area (18) of the respective second motor vehicles (14) to a central data-processing unit (20) ;
- depending on the aggregated position data (P), specifying at least one route (22a, 22b) which was at least partly used by at least some of the people (F1, F2, F3, F4) by means of the central data-processing unit (20); and
- providing route data (W) of the specified at least one route (22a, 22b) as part of the map data (K) in the first motor vehicle (14);
**characterized in that**
depending on the aggregated position data (P), it shall be reviewed whether at least one stop point (24) is located on the specified route (22a, 22b), and if this is the case then a position of the stop point (24) shall be provided to the first motor vehicle (14) as part of the route data (W), wherein, depending on the detected position data (P), movement data of the people (F1, F2, F3, F4) are determined and the at least one stop point (24) is specified depending on said movement data.

2. Method according to Claim 1,
**characterized in that**
the people (F1, F2, F3, F4) represent pedestrians (F1, F2) and/or cyclists (F3, F4).

3. Method according to one of the preceding claims,
**characterized in that**
the second motor vehicles (14) detect the people (F1, F2, F3, F4) in the respective surrounding area (18) by means of at least one environment sensor (16) in each case.

4. Method according to one of the preceding claims,
**characterized in that**
the second motor vehicles (14) repeatedly detect the position data (P) of the people (F1, F2, F3, F4) for as long as the respective people (F1, F2, F3, F4) are located in a specific detection area of the respective second motor vehicles (14).

5. Method according to one of the preceding claims,
**characterized in that**
in order to detect at least one of the people (F1, F2, F3, F4) through at least one of the second motor vehicles (14), an object in the surrounding area (18) of the second motor vehicle (14) is detected, and the detected object is classified as a person (F1, F2, F3, F4) or at least as being related to a person (F1, F2, F3, F4) .

6. Method according to one of the preceding claims,
**characterized in that**
in order to provide the position data (P) concerning at least one of the detected people (F1, F2, F3, F4) through at least one of the second motor vehicles (14), a first position (P1, P2, P3, P4, P5) of the detected person (F1, F2, F3, F4) relative to the second motor vehicle (14) is specified, and a second position of the second motor vehicle (14) is specified, and the position data (P) are determined depending on the first position (P1, P2, P3, P4, P5) and the second position.

7. Method according to one of the preceding claims,
**characterized in that**
at least one driver assistance function of the first motor vehicle (14) is carried out depending on the route data (W) provided.

8. Motor vehicle (14) which is designed to detect people (F1, F2, F3, F4) in the surrounding area (18) of the motor vehicle (14) and to specify position data (P) of the people (F1, F2, F3, F4), wherein the motor vehicle (14) is designed to transmit the specified position data (P) to a central data-processing unit (20) and to receive, from the central data-processing unit (20), route data (W) of at least one route (22a, 22b), which is specified on the basis of aggregated position data (P) of the motor vehicle (14) and/or of second motor vehicles (14) and which was at least partly used by people (F1, F2, F3, F4), as part of map data (K),
**characterized in that**
depending on the aggregated position data (P), it is reviewed whether at least one stop point (24) is located on the specified route (22a, 22b), and if this is the case then a position of the stop point (24) is provided to the motor vehicle (14) as part of the route data (W), wherein, depending on the detected position data (P), movement data of the people (F1, F2, F3, F4) are determined and the at least one stop point (24) is specified depending on said movement data.

9. Central data-processing unit (20) for providing map data (K) in a first motor vehicle (14), wherein the central data-processing unit (20) is designed
- to receive position data (P) detected by a plurality of second motor vehicles (14) concerning people (F1, F2, F3, F4) detected by the second motor vehicles (14) in a surrounding area (18) of the respective second motor vehicles (14);
- to aggregate the received position data (P) and, depending on the aggregated position data (P), to specify at least one route (22a, 22b) which was at least partly used by at least some of the people (F1, F2, F3, F4); and
- to provide route data (W) of the specified at least one route (22a, 22b) as part of the map data (K) in the first motor vehicle (14);
**characterized in that**
the central data-processing unit (20) is designed, depending on the aggregated position data (P), to review whether at least one stop point (24) is located on the specified route (22a, 22b), and if this is the case then to provide a position of the stop point (24) to the first motor vehicle (14) as part of the route data (W), wherein the central data-processing unit (20) is designed, depending on the detected position data (P), to determine movement data of the people (F1, F2, F3, F4) and to specify the at least one stop point (24) depending on said movement data.

## Revendications

1. Procédé permettant de fournir des données cartographiques (K) dans un premier véhicule automobile (14), comprenant les étapes consistant à :
- transmettre à un dispositif de traitement de données central (20) des données de position (P) détectées par plusieurs deuxièmes véhicules automobiles (14) concernant des personnes (F1, F2, F3, F4) détectées par les deuxièmes véhicules automobiles (14) dans un environnement (18) des deuxièmes véhicules automobiles (14) respectifs ;
- en fonction des données de position (P) agrégées, déterminer au moyen du dispositif de traitement de données central (20) au moins un chemin (22a, 22b) qui a été emprunté au moins partiellement par au moins certaines des personnes (F1, F2, F3, F4) ; et
- fournir des données de cheminement (W) du au moins un chemin (22a, 22b) déterminé dans le cadre des données cartographiques (K) dans le premier véhicule automobile (14) ;
**caractérisé en ce qu'**en fonction des données de position agrégées (P) il est vérifié si au moins un point d'arrêt (24) se trouve sur le chemin (22a, 22b) déterminé, et si c'est le cas, une position du point d'arrêt (24) est fournie au premier véhicule automobile (14) dans le cadre des données de cheminement (W), dans lequel en fonction des données de position (P) détectées, des données de mouvement des personnes (F1, F2, F3, F4) sont établies et ledit au moins un point d'arrêt (24) est déterminé en fonction des données de mouvement.

2. Procédé selon la revendication 1, **caractérisé en ce que** les personnes (F1, F2, F3, F4) sont des piétons (F1, F2) et/ou des cyclistes (F3, F4).

3. Procédé selon l'une quelconque des revendications précédentes, **caractérisé en ce que** les deuxièmes véhicules automobiles (14) détectent les personnes (F1, F2, F3, F4) dans l'environnement (18) respectif au moyen d'au moins un capteur d'environnement (16) respectivement.

4. Procédé selon l'une quelconque des revendications précédentes, **caractérisé en ce que** les deuxièmes véhicules automobiles (14) détectent les données de position (P) des personnes (F1, F2, F3, F4) de manière répétée tant que les personnes (F1, F2, F3, F4) respectives se trouvent dans une zone de détection déterminée des deuxièmes véhicules automobiles (14) respectifs.

5. Procédé selon l'une quelconque des revendications précédentes, **caractérisé en ce que** pour la détection d'au moins l'une des personnes (F1, F2, F3, F4) par au moins l'un des deuxièmes véhicules automobiles (14), un objet dans l'environnement (18) du deuxième véhicule automobile (14) est détecté, et l'objet détecté est classifié comme une personne (F1, F2, F3, F4) ou du moins comme étant lié à une personne (F1, F2, F3, F4).

6. Procédé selon l'une quelconque des revendications précédentes, **caractérisé en ce que** pour la fourniture des données de position (P) concernant au moins l'une des personnes (F1, F2, F3, F4) détectées par au moins l'un des deuxièmes véhicules automobiles (14), une première position (P1, P2, P3, P4, P5) de la personne (F1, F2, F3, F4) détectée par rapport au deuxième véhicule automobile (14) est déterminée, et une deuxième position du deuxième véhicule automobile (14) est déterminée, et les données de position (P) sont établies en fonction de la première position (P1, P2, P3, P4, P5) et de la deuxième position.

7. Procédé selon l'une quelconque des revendications précédentes, **caractérisé en ce qu'**au moins une fonction d'assistance au conducteur du premier véhicule automobile (14) est effectuée en fonction des données de cheminement (W) fournies.

8. Véhicule automobile (14), qui est conçu pour détecter des personnes (F1, F2, F3, F4) dans l'environnement (18) du véhicule automobile (14) et pour déterminer des données de position (P) des personnes (F1, F2, F3, F4), dans lequel le véhicule automobile (14) est conçu pour transmettre les données de position (P) déterminées à un dispositif de traitement de données central (20), et pour recevoir du deuxième dispositif de traitement de données central (20) dans le cadre des données cartographiques (K) des données de cheminement (W) d'au moins un chemin (22a, 22b), déterminé sur la base de données de position (P) agrégées du véhicule automobile (14) et/ou de deuxièmes véhicules automobiles (14), qui a été emprunté au moins partiellement par des personnes (F1, F2, F3, F4),
**caractérisé en ce qu'**en fonction des données de position agrégées (P) il est vérifié si au moins un point d'arrêt (24) se trouve sur le chemin (22a, 22b) déterminé, et si c'est le cas, une position du point d'arrêt (24) est fournie au véhicule automobile (14) dans le cadre des données de cheminement (W), dans lequel en fonction des données de position (P) détectées, des données de mouvement des personnes (F1, F2, F3, F4) sont établies et ledit au moins un point d'arrêt (24) est déterminé en fonction des données de mouvement.

9. Dispositif de traitement de données central (20) permettant de fournir des données cartographiques (K) dans un premier véhicule automobile (14), dans lequel le dispositif de traitement de données central (20) est conçu pour
- recevoir des données de position (P) détectées par plusieurs deuxièmes véhicules automobiles (14) concernant des personnes (F1, F2, F3, F4) détectées par les deuxièmes véhicules automobiles (14) dans un environnement (18) des deuxièmes véhicules automobiles (14) respectifs ;
- agréger les données de position (P) reçues, et déterminer en fonction des données de position (P) agrégées au moins un chemin (22a, 22b) qui a été emprunté au moins partiellement par au moins certaines des personnes (F1, F2, F3, F4) ; et
- fournir des données de cheminement (W) du au moins un chemin (22a, 22b) déterminé dans le cadre des données cartographiques (K) dans le premier véhicule automobile (14) ;
**caractérisé en ce que** le dispositif de traitement de données central (20) est conçu pour vérifier en fonction des données de position (P) agrégées si au moins un point d'arrêt (24) se trouve sur le chemin (22a, 22b) déterminé, et si c'est le cas, fournir au premier véhicule automobile (14) une position du point d'arrêt (24) dans le cadre des données de cheminement (W), dans lequel le dispositif de traitement de données central (20) est conçu pour établir en fonction des données de position (P) détectées des données de mouvement des personnes (F1, F2, F3, F4) et pour déterminer ledit au moins un point d'arrêt (24) en fonction des données de mouvement.
